# EUROPÄISCHE PATENTSCHRIFT

(11) **EP 1 576 057 B1**
(45) Veröffentlichungstag und Bekanntmachung des Hinweises auf die Patenterteilung: **24.01.2007**
(21) Anmeldenummer: 03798147.9
(22) Anmeldetag: 03.09.2003
(51) Int. Cl.: C08L 91/06, C08L 61/06, C08K 3/08

(54) **MISCHUNG ZUR HERSTELLUNG VON GESINTERTEN FORMTEILEN**
MIXTURE FOR THE PRODUCTION OF SINTERED MOLDED PARTS
MELANGE SERVANT A PRODUIRE DES PIECES MOULEES FRITEES

(30) Priorität: 24.09.2002 DE 10244486
(43) Veröffentlichungstag der Anmeldung: 21.09.2005
(73) Patentinhaber: GKN Sinter Metals Holding GmbH, 42477 Radevormwald (DE)
(72) Erfinder: LINDENAU, Rene, 42477 Radevormwald (DE); DOLLMEIER, Klaus, 58332 Schwelm (DE); ARNHOLD, Volker, 42369 Wuppertal (DE)
(74) Vertreter: Maxton Langmaack & Partner
(86) Internationale Anmeldenummer: PCT/EP2003/009737
(87) Internationale Veröffentlichungsnummer: WO 2004/029157

(56) Entgegenhaltungen:
- WO-A-01/91955
- US-A- 5 380 179

## Beschreibung

Die vorliegende Erfindung betrifft eine Mischung zur Herstellung von gesinterten Formteilen, Verfahren zur Herstellung derselben sowie deren Verwendung.

Gesinterte Formteile finden vielfach Anwendung insbesondere im Automobilbau und dort insbesondere als Formteile im Motor und Getriebe. Eine Schwierigkeit bei der Herstellung gesinterter Formteile besteht darin, diese mit einer möglichst hohen Dichte herzustellen. Ein durch ein übliches pulvermetallurgisches Verfahren aus einem sinterbaren Pulver ein- oder mehrschrittig gepreßtes Formteil, allgemein als Grünkörper bezeichnet, wird in einem zweiten Schritt unter Schutzatmosphäre gesintert, so daß sich ein festes und auch formgenaues metallisches Formteil ergibt.

Die Dichte solchermaßen erhaltener gesinterter Formteile hängt dabei wesentlich von der im ersten Preßschritt erzielten Dichte des Grünkörpers, der sogenannten Gründichte (Preßdichte), ab. Daher ist es erstrebenswert, bereits im ersten Verfahrensschritt Grünkörper herzustellen, welche eine möglichst hohe Dichte aufweisen. Die üblicherweise im Stand der Technik angewendeten hohen Preßdrücke zur Herstellung von Grünkörpern mit einer hohen Dichte haben jedoch einerseits einen hohen Verschleiß am Preßwerkzeug selbst zur Folge und führen des weiteren auch zu einer erhöhten Ausstoßgleitreibung des fertigen Grünkörpers in der Preßmatrize. Dadurch sind hier höhere Ausstoßkräfte mit entsprechend erhöhtem Verschleiß auf das Preßwerkzeug aufzubringen. Darüber hinaus bergen hohe Ausstoßkräfte die Gefahr einer unerwünschten lokalen Nachverdichtung und Rißbildung des Grünkörpers in sich. Aufgabe der vorliegenden Erfindung ist es daher, eine Mischung zur Verfügung zu stellen, mittels welcher die vorgenannten Nachteile vermieden werden.

Zur Lösung dieser Aufgabe wird eine Mischung zur Herstellung von gesinterten Formteilen vorgeschlagen, umfassend ein metallisches und/oder Kunststoffmaterial und ein Preßhilfsmittel, wobei das Preßhilfsmittel 25 - 60 Gew%, bezogen auf die Gesamtmenge des Preßhilfsmittels, eines Polyglykols, und 40 - 75 Gew%, bezogen auf die Gesamtmenge des Preßhilfsmittels, eines Montanwachses umfaßt.

Als sinterbare Formteile im Sinne der vorliegenden Erfindung werden Formteile verstanden, welche vollständig aus einem sinterfähigen Material hergestellt wurden, andererseits werden hierunter auch Verbundteile verstanden, wobei der Grundkörper eines derartigen Verbundteils beispielsweise aus einer aluminium- oder eisenhaltigen Mischung hergestellt sein kann, und der mit dem Grundkörper weiter verbundene Körper aus einem weiteren Material, beispielsweise Gußstahl, gesintert der massiv, oder aus massivem Aluguß hergestellt sein kann. Umgekehrt kann das Verbundteil auch beispielsweise lediglich auf den Stirnseiten oder seiner Oberfläche eine gesinterte Schicht aus einer beispielsweise aluminium- oder keramikhaltigen Mischung aufweisen, wohingegen der Grundkörper aus beispielsweise Stahl oder Gußeisen, gesintert oder massiv, ist. Die gesinterten Formteile können dabei kalibriert und/oder ausgehärtet in der Wärme sein.

Metallische und/oder Kunststoffmaterialien im Sinne dieser Erfindung sind insbesondere Pulver bzw. Mischungen aus metallischen, keramischen und/oder Kunststoffbestandteilen, beispielsweise aus Stählen wie Chrom-Nickel-Stahl, Bronzen, Nikkelbasislegierungen wie Hastalloy, Inconel, Metalloxiden, - nitriden, -siliziden o. dgl., weiterhin aluminiumhaltige Pulver bzw. Mischungen, wobei die Mischungen auch hochschmelzende Bestandteile enthalten können wie beispielsweise Platin o. dgl. Das verwendete Pulver und seine Teilchengröße ist vom jeweiligen Einsatzzweck abhängig. Bevorzugte eisenhaltige Pulver sind die Legierungen 316L, 304L, Inconel 600, Inconel 625, Monel und Hastalloy B, X und C. Weiterhin kann das metallische und/oder Kunststoffmaterial ganz oder teilweise aus Kurzfasern bzw. Fasern sein, vorzugsweise Fasern mit Durchmessern zwischen etwa 0,1 - 2 µm und einer Länge von wenigen µm bis hin zu 50 mm.

Montanwachse im Sinne dieser Erfindung sind Bitumen der Braunkohle, entstanden aus Harzen, Wachsen und Fetten tertiärer Pflanzen. Es handelt sich dabei um Ester der sogenannten Montansäuren (Fettsäuren) mit langkettigen Wachsalkoholen, insbesondere C₂₀ - C₃₆ Fettsäureester, bevorzugt C₂₄ - C₃₄ Fettsäureester. Neben den vorgenannten Bestandteilen kann Montanwachs weitere freie Fettsäuren und freie Wachsalkohole sowie Montanharze, Ketone und asphaltartiges Material umfassen. Montanwachse stellen in aller Regel Mischungen unterschiedlicher Fettsäureester dar. Bevorzugt sind Montanwachse mit einer Säurezahl [mg KOH/g] in einem Bereich von 5 bis 30, weiter bevorzugt 10 bis 25, und/oder einer Verseifungszahl [mg KOH/s] in einem Bereich von 100 bis 200, weiter bevorzugt 120 bis 160. Die Viskosität [mPas] bei 100°C liegt vorzugsweise in einem Bereich von 10 bis 40, weiter bevorzugt 15 bis 35.

Überraschenderweise hat sich gezeigt, daß durch die Zugabe des definierten Preßhilfsmittels zu einem sinterfähigen Material im metallurgischen Preßverfahren Grünkörper hergestellt werden können, welche einerseits deutlich erhöhte Werte für die Grünfestigkeit und die Preßdichte insbesondere bei Raumtemperatur des verwendeten Preßwerkzeuges aufweisen, darüber hinaus jedoch auch erheblich geringere Ausstoßkräfte bei der Entnahme der Grünkörper aus dem Preßwerkzeug benötigen. Hierdurch wird einerseits der Verschleiß der verwendeten Preßwerkzeuge erheblich herabgesetzt, andererseits ist die Gefahr von Rißbildungen oder aber lokalen Nachverdichtungen des hergestellten Grünkörpers gemindert. Des weiteren sind die mit der erfindungsgemäßen Mischung erzielbaren Preßdichten insbesondere bei Raumtemperatur des Werkzeuges erhöht und liegen in der Nähe derjenigen des endbearbeiteten und gesinterten Formteils.

Die erfindungsgemäße Mischung kann noch weitere Bestandteile enthalten, insbesondere Schmiermittel, bevorzugt in einer Menge von 0,2 - 5 Gew%, bezogen auf die Gesamtmenge der Mischung. Als Schmiermittel können hierbei einerseits selbstschmierende Mittel vorgesehen sein wie beispielsweise MoS₂, WS₂, BN, N, nS sowie Graphit und/oder andere Kohlenstoffmodifikationen wie Koks, polarisierter Graphit o.ä. Vorzugsweise werden 1 - 3 Gew% des Schmiermittels der sinterfähigen Mischung zugegeben. Durch Einsatz der vorgenannten Schmiermittel können den aus der sinterfähigen Mischung hergestellten Formteilen selbstschmierende Eigenschaften vermittelt werden.

Die erfindungsgemäße Mischung kann weiterhin noch sonstige Gleitmittel oder Aerosile enthalten. Sie kann durch Mischen der einzelnen Bestandteile mit üblichen Apparaturen wie Taumelmischern sowohl in der Wärme (Warmmischen) als auch bei Raumtemperatur (Kaltmischen) hergestellt werden, wobei das Warmmischen bevorzugt ist.

Bevorzugt sind Mischungen, welche 30 - 55 Gew% Polyglykole, weiter bevorzugt 32 - 53 Gew%, und 45 - 70 Gew% Montanwachse, jeweils bezogen auf die Gesamtmenge des Preßhilfsmittels, umfassen.

Vorteilhafterweise umfassen die vom Preßhilfsmittel der erfindungsgemäßen Mischung umfaßten Polyglykole Polyethylenglykole. Unter Polyethylenglykole werden im Sinne dieser Erfindung auch Mischungen von Polyethylenglykolen unterschiedlicher Molekulargewichte umfaßt. Besonders vorteilhafterweise sind hierbei Polyethylenglykole vorgesehen mit einer molaren Masse in einem Bereich von etwa 100 - 20.000 g/mol, bevorzugt 100 - 7.000 g/mol, weiter bevorzugt 100 - 6.500 g/mol, noch weiter bevorzugt 3.000 - 6.000 g/mol. Der große Vorteil der vorgenannten Polyethylenglykole liegt in der Tatsache, daß diese einen relativ niedrigen Erweichungspunkt in der Regel in einem Bereich zwischen 40 und 100°C aufweisen, wodurch es möglich ist, die im metallurgischen Verfahren verwendeten Preßformen mit kaltem Material zu füllen, wodurch Klumpenbildungen o.ä. vermieden werden. Bei Erwärmung des Werkzeuges im Preßvorgang ermöglichen die ausgewählten Polyethylenglykole eine Schmierung zusammen mit den eingesetzten Montanwachsen, so daß höhere Preßdichten und auch Grünfestigkeiten der hergestellten Grünkörper erreicht werden.
Vorteilhafterweise umfassen die vom Preßhilfsmittel umfaßten Montanwachse der erfindungsgemäßen Mischung Fettsäureester, basierend auf C₂₄-C₃₄-Fettsäuren.

Die vorliegende Erfindung betrifft weiterhin ein Verfahren zur Herstellung der erfindungsgemäßen Mischung, wobei
- in einem ersten Schritt die von dem Preßhilfsmittel umfaßten Polyglykole und Montanwachse zusammen geschmolzen werden; und
- in einem zweiten Schritt das gemäß dem ersten Schritt hergestellte Preßhilfsmittel dem metallischen und/oder Kunststoffmaterial zugesetzt werden.

Weiterhin bevorzugt ist vorgesehen, daß nach dem ersten Schritt des erfindungsgemäßen Verfahrens die erhaltene und abgekühlte Schmelze gemahlen oder verdüst wird. Überraschenderweise hat sich gezeigt, daß bei dem erfindungsgemäßen Verfahren Grünfestigkeiten der hergestellten Grünkörper erhalten werden, welche deutlich oberhalb derjenigen liegen, welche üblicherweise mit den aus dem Stand der Technik bekannten Preßhilfsmitteln erzielbar sind.

Alternativ ist ein Verfahren vorgesehen, gemäß welchem
- in einem ersten Schritt die vom Preßhilfsmittel umfaßten Polyglykole und Montanwachse miteinander vermischt werden; und
- in einem zweiten Schritt das gemäß dem ersten Schritt hergestellte Preßhilfsmittel dem metallischen und/oder Kunststoffmaterial zugesetzt wird.

Auch mittels dieses alternativen Verfahrens nach dem metallurgischen Preßvorgang erhaltene Grünkörper weisen Grünfestigkeiten auf, welche über den mit aus dem Stand der Technik bekannten üblichen Preßhilfsmitteln erhaltenen liegen. Weiterhin betrifft die vorliegende Erfindung die Verwendung der erfindungsgemäßen Mischung zur Herstellung von gesinterten Formteilen. Des weiteren betrifft die vorliegende Erfindung ein Preßhilfsmittel gemäß den Ansprüchen 1 bis 4.

Schließlich betrifft die vorliegende Erfindung Grünkörper, hergestellt aus der erfindungsgemäßen Mischung, mit einer Grünfestigkeit gemäß ISO 3995-1985 bei Raumtemperatur des verwendeten Preßwerkzeuges und einem Druck von 600 MPa von größer als 7,55 N/mm². Vorteilhafterweise weisen die erfindungsgemäßen Grünkörper weiterhin eine Preßdichte gemäß ISO 3927/1985 bei 800 MPa und Raumtemperatur des verwendeten Preßwerkzeuges von mindestens 7,14 g/cm³ auf.

Diese und weitere Vorteile der vorliegenden Erfindung werden anhand der folgenden Beispiele beschrieben.

Es wurden Mischungen hergestellt aus dem sinterbaren Metallpulver Ancorsteel 85 HP der Firma Hoeganaes Corporation, USA, mit 0,65 Gew% Kohlenstoff und 0,6 Gew%, jeweils bezogen auf die Gesamtmenge der Mischung, der folgenden Preßhilfsmittel:
a) Licowax C, Firma Clariant GmbH, Frankfurt am Main, welches ein Bisstearoylethylendiamin (Amidwachs) ist;
b) Acrawax C, Lonza AG, Basel, Schweiz, welches ein N,N'- Ethylenbisstearamid (Amidwachs) ist;
c) Kenolube P11, Höganäs AB, Höganäs, Schweden, welches ein Gemisch aus 22,5 Gew% Zinkstearat und 77,5% eines Amidwachses darstellt;
d) Polyglykol 6000 PF, Clariant GmbH, Frankfurt am Main, welches ein Polyethylenglykol mit einer molaren Masse etwa 6.000 g/mol darstellt;
e) Licowax E, Clariant GmbH, Frankfurt am Main, welches ein Montanwachs aus Estern von C₂₄-C₃₄-Fettsäuren mit einer Säurezahl [mg KOH/g] in einen Bereich von 15 bis 20 und einer Verseifungszahl in einem Bereich von 130 bis 160 ist;
f) ein Gemisch aus 67 Gew% Licowax E und 33 Gew% Polyglykol 6000 PF, jeweils bezogen auf die Gesamtmenge des Preßhilfsmittels, wobei diese Mischung hergestellt wurde durch gemeinsames Schmelzen des Montanwachses und des Polyethylenglykols, Erstarren der Schmelze mit ggf. nachfolgendem Kühlen (z.B. mit flüssigem Stickstoff) und anschließendes Mahlen derselben zu einem Pulver;
g) ein Gemisch aus 50 Gew% Licowax E und 50 Gew% Polyglykol 6000 PF, wobei diese Mischung hergestellt wurde durch gemeinsames Schmelzen des Montanwachses und des Polyethylenglykols, Erstarren der Schmelze mit ggf. nachfolgendem Kühlen (z.B. mit flüssigem Stickstoff) und anschließendes Mahlen derselben zu einem Pulver;
h) ein Gemisch aus 67 Gew% Licowax E und 33 Gew% Polyglykol 6000 PF, wobei die Mischung ohne vorheriges Verschmelzen in einem üblichen Taumelmischer vermischt wurde;
i) ein Gemisch aus 50 Gew% Licowax E und 50 Gew% Polyglykol 6000 PF, wobei die Mischung ohne vorheriges Verschmelzen in einem üblichen Taumelmischer vermischt wurde, jeweils bezogen auf die Gesamtmenge des Preßhilfsmittels. Alternativ zum Mahlen der Mischungen gemäß f) und g) kann die Schmelze auch verdüst werden.

Der Anteil des zugesetzten Preßhilfsmittels kann allgemein in einem Bereich von etwa 0,1 bis 5 Gew%, bevorzugt 0,3 bis 3 Gew%, weiter bevorzugt 0,5 bis 1,5 Gew% bezogen auf die Gesamtmenge der erfindungsgemäßen Mischung, betragen.

Die vorgenannten Mischungen wurden in ein übliches Preßwerkzeug eingefüllt und bei unterschiedlichen Drücken (400, 600 und 800 MPa) zu Zylindern mit einem Durchmesser von 14,3 mm und einer Länge von 12 cm gepreßt. Die physikalischen Eigenschaften der solchermaßen erhaltenen Grünkörper sind in den Tabellen 1 und 2 dargestellt, wobei sich die Werte in der Tabelle 1 beziehen auf eine Werkzeugtemperatur von 20°C (Raumtemperatur) und diejenigen in Tabelle 2 auf eine Werkzeugtemperatur von 70°C.

**Tabelle 1:**

| **Eigenschaften bei Raumtemperatur** | **a)** | **b)** | **c)** | **d)** | **e)** | **f)** | **g)** | **h)** | **i)** |
|---|---|---|---|---|---|---|---|---|---|
| Fließzeit (s/50g) | 27,20 | | | 27,80 | 28,12 | 27,37 | 26,10 | 27,43 | 27,09 |
| Schüttdichte (g/cm³) | 2,94 | | | 2,91 | 2,98 | 2,96 | 2,97 | 2,97 | 2,98 |
| Grünfestigkeit (MPa) bei p = 600 MPa | 6,50 | | | 7,50 | 7,20 | 8,00 | 7,60 | 7,50 | 7,80 |
| Preßdichte (g/cm³) bei 400 MPa | 6,70 | 6,67 | 6,68 | 6,69 | 6,75 | 6,76 | 6,79 | 6,74 | 6,75 |
| Preßdichte (g/cm³) bei 600 MPa | 6,99 | 7,01 | 7,02 | 6,98 | 7,01 | 7,02 | 7,07 | 7,06 | 7,05 |
| Preßdichte (g/cm³) bei 800 MPa | 7,07 | 7,13 | 7,14 | 7,09 | 7,11 | 7,14 | 7,16 | 7,18 | 7,17 |

**Tabelle 2:**

| **Eigenschaften bei 70°C** | **a)** | **b)** | **c)** | **d)** | **e)** | **f)** | **g)** | **h)** | **i)** |
|---|---|---|---|---|---|---|---|---|---|
| Fließzeit (s/50g) | 27,20 | | | 27,80 | 28,12 | 27,37 | 26,10 | 27,43 | 27,09 |
| Schüttdichte (g/cm³) | 2,94 | | | 2,91 | 2,98 | 2,96 | 2,97 | 2,97 | 2,98 |
| Grünfestigkeit (MPa) bei p = 600 MPa | 8,50 | | | 22,80 | 15,60 | 17,00 | 17,10 | 18,30 | 19,70 |
| Preßdichte (g/cm³) bei 400 MPa | 6,73 | 6,75 | 6,79 | 6,89 | 6,89 | 6,90 | 6,93 | 6,91 | 6,92 |
| Preßdichte (g/cm³) bei 600 MPa | 7,09 | 7,10 | 7,15 | 7,18 | 7,19 | 7,19 | 7,21 | 7,23 | 7,22 |
| Preßdichte (g/cm³) bei 800 MPa | 7,11 | 7,20 | 7,23 | 7,26 | 7,27 | 7,26 | 7,27 | 7,27 | 7,25 |
| Oberfläche | trocken | trocken | trocken | naß | trocken | trocken | trocken | klebrig | klebrig |

Die in den Tabellen 1 und 2 wiedergegebenen Werte sind Mittelwerte, gebildet aus jeweils drei Messungen. Die in den Tabellen 1 und 2 angegebenen physikalischen Eigenschaften wurden gemäß den ISO-Normen 3923-1979 für die Schüttdichte, ISO 4490-1978 für die Fließzeit, ISO 3927-1985 für die Verpreßbarkeit und ISO 3995-1985 für die Grünfestigkeit bestimmt. Wie man den Tabellen 1 und 2 entnehmen kann, weisen die aus den Mischungen f) bis i) hergestellten Grünkörper hohe Werte nicht nur für die Grünfestigkeit, sondern auch für die Preßdichte auf. Diese sind den Mischungen mit den aus dem Stand der Technik bekannten Preßhilfsmitteln gemäß Mischung a), b) und c) deutlich überlegen, jedoch auch den Mischungen, welche lediglich als Preßhilfsmittel entweder nur ein Polyethylenglykol (Mischung d)) oder aber nur ein Montanwachs (Mischung e)) aufweisen.

Des weiteren wurden für die aus den Mischungen a) bis i) erhaltenen Grünkörper die Ausstoßkräfte aus dem Preßwerkzeug ermittelt. Diese sind nachfolgend in den Tabellen 3 und 4 wiedergegeben. Dabei zeigt Tabelle 3 die Werte bei Raumtemperatur (20°C) des Preßwerkzeuges, Tabelle 4 die bei einer Temperatur von 70°C des Preßwerkzeuges ermittelten Ausstoßkräfte.

**Tabelle 3:**

| **Ausstoßkraft (bei Raumtemperatur)** | **a)** | **b)** | **c)** | **d)** | **e)** | **f)** | **g)** | **h)** | **i)** |
|---|---|---|---|---|---|---|---|---|---|
| bei400 Mpa | 163 | 166 | 154 | 171 | 170 | 156 | 128 | 145 | 138 |
| bei 600 MPa | 252 | 257 | 199 | 242 | 221 | 214 | 169 | 207 | 184 |
| bei 800 MPa | 351 | 354 | 260 | 301 | 250 | 218 | 197 | 211 | 205 |

**Tabelle 4:**

| **Ausstoßkraft (bei 70°C)** | **MW a)** | **AW b)** | **Keno c)** | **SP d)** | **XXL e)** | **M67 f)** | **M50 g)** | **867 h)** | **B50 i)** |
|---|---|---|---|---|---|---|---|---|---|
| bei 400 MPa | 153 | 1148 | 143 | 127 | 131 | 121 | 120 | 118 | 127 |
| bei 600 MPa | 221 | 215 | 184 | 188 | 180 | 147 | 134 | 153 | 130 |
| bei 800 MPa | 294 | 300 | 195 | 193 | 209 | 151 | 142 | 162 | 145 |

Deutlich ist den Tabellen 3 und 4 zu entnehmen, daß die Ausstoßkräfte von Grünkörpern, hergestellt aus den Mischungen f) bis i) deutlich abgesenkt sind gegenüber denjenigen Grünkörpern, hergestellt aus den Mischungen a) bis e). Die Ausstoßkräfte liegen hier um etwa 25% niedriger. Hierdurch werden die verwendeten Preßwerkzeuge erheblich weniger stark beansprucht, so daß deren Verschleiß zurückgeht und sich dadurch die Lebensdauer erhöht. Außerdem weisen die solchermaßen erhaltenen Grünlinge so gut wie keine lokalen Nachverdichtungen oder Risse auf.

Durch die vorliegende Erfindung wird eine Mischung zur Verfügung gestellt, welche zwei weitverbreitete Nachteile bekannter Mischungen in einer einzigen Mischung vermindert, nämlich einerseits ist es durch die erfindungsgemäße Mischung möglich, hohe Grünfestigkeiten der aus dieser erhaltenen Grundkörper und ebenfalls hohe Preßdichten derselben zu erzielen, andererseits können die Ausstoßkräfte aus dem Preßwerkzeug erheblich vermindert werden, wodurch sich dessen Lebensdauer erhöht. Die aus den erfindungsgemäßen Mischungen hergestellten Grünkörper weisen eine exzellente Qualität auf. Durch die verminderte Rißbildung und die Verminderung der Bildung lokaler Nachverdichtungsstellen ist eine qualitativ gleich- und hochwertige Produktion derselben sichergestellt.

## Patentansprüche

1. Mischung zur Herstellung von gesinterten Formteilen, umfassend ein metallisches und/oder Kunststoffmaterial und ein Preßhilfsmittel, wobei das Preßhilfsmittel 25 - 60 Gew%, bezogen auf die Gesamtmenge des Preßhilfsmittels, eines Polyglykols, und 40 - 75 Gew%, bezogen auf die Gesamtmenge des Preßhilfsmittels, eines Montanwachses umfaßt.

2. Mischung gemäß Anspruch 1, **dadurch gekennzeichnet, daß** das Polyglykol Polyethylenglykole umfaßt.

3. Mischung gemäß einem der vorhergehenden Ansprüche, **dadurch gekennzeichnet, daß** das Preßhilfsmittel Polyethylenglykole mit einer molaren Masse von 100 bis 20.000 g/mol, bevorzugt 100 bis 7.000 g/mol, umfaßt.

4. Mischung gemäß einem der vorhergehenden Ansprüche, **dadurch gekennzeichnet, daß** die Montanwachse C₂₄ - C₃₄ Fettsäureester umfassen.

5. Verfahren zur Herstellung einer Mischung gemäß einem der Ansprüche 1 bis 4, wobei
- in einem ersten Schritt die vom Preßhilfsmittel umfaßten Polyglykole und Montanwachse zusammen geschmolzen werden; und
- in einem zweiten Schritt das gemäß dem ersten Schritt hergestellte Preßhilfsmittel dem metallischen und/oder Kunststoffmaterial zugesetzt wird.

6. Verfahren gemäß Anspruch 5, **dadurch gekennzeichnet, daß** nach dem ersten Schritt die erhaltene und gebildete Schmelze aus Polyglykol und Montanwachs gemahlen oder verdüst wird.

7. Verfahren zur Herstellung einer Mischung gemäß einem der Ansprüche 1 bis 4, wobei
- in einem ersten Schritt die vom Preßhilfsmittel umfaßten Polyglykole und Montanwachse miteinander vermischt werden; und
- in einem zweiten Schritt das gemäß dem ersten Schritt hergestellte Preßhilfsmittel dem metallischen und/oder Kunststoffmaterial zugesetzt wird.

8. Verwendung einer Mischung gemäß einem der Ansprüche 1 bis 4 zur Herstellung von gesinterten Formteilen.

9. Preßhilfsmittel gemäß einem der Ansprüche 1 bis 4.

10. Grünkörper, hergestellt aus einer Mischung gemäß einem der Ansprüche 1 bis 4, **dadurch gekennzeichnet, daß** dieser eine Grünfestigkeit gemäß ISO 3995-1985 bei Raumtemperatur des Preßwerkzeuges und einem Druck von 600 MPa von mehr als 7,55 N/mm² aufweist.

11. Grünkörper gemäß Anspruch 9, **dadurch gekennzeichnet, daß** dieser eine Preßdichte gemäß ISO 3927-1985 bei 800 MPa und bei Raumtemperatur des Preßwerkzeuges von mindestens 7,14 g/cm³ aufweist.

## Claims

1. A mixture for producing sintered shaped articles, comprising a metallic and/or plastics material and a compaction aid, wherein the compaction aid comprises 25 - 60 wt.%, relative to the total quantity of compaction aid, of a polyglycol and 40 - 75 wt.%, relative to the total quantity of the compaction aid, of a montan wax.

2. A mixture according to claim 1, **characterised in that** the polyglycol comprises polyethylene glycols.

3. A mixture according to one of the preceding claims, **characterised in that** the compaction aid comprises polyethylene glycols with a molar mass of 100 to 20,000 g/mol, preferably 100 to 7,000 g/mol.

4. A mixture according to one of the preceding claims, **characterised in that** the montan waxes comprise C₂₄ - C₃₄ fatty acid esters.

5. A method for producing a mixture according to one of claims 1 to 4, wherein
- in a first step the polyglycols and montan waxes included in the compaction aid are melted together; and
- in a second step the compaction aid produced according to the first step is added to the metallic and/or plastics material.

6. A method according to claim 5, **characterised in that**, after the first step, the resultant melt formed from polyglycol and montan wax is ground or atomised.

7. A method for producing a mixture according to one of claims 1 to 4, wherein
- in a first step the polyglycols and montan waxes included in the compaction aid are mixed together; and
- in a second step the compaction aid produced according to the first step is added to the metallic and/or plastics material.

8. Use of a mixture according to one of claims 1 to 4 to produce sintered shaped articles.

9. A compaction aid according to one of claims 1 to 4.

10. A green compact, produced from a mixture according to one of claims 1 to 4, **characterised in that** it has a green strength to ISO 3995-1985 with the compaction tool at room temperature and under a pressure of 600 MPa of more than 7.55 N/mm².

11. A green compact according to claim 9, **characterised in that** it has a compaction density to ISO 3927-1985 at 800 MPa and with the compaction tool at room temperature of at least 7.14 g/cm³.

## Revendications

1. Mélange pour la fabrication de pièces moulées frittées, comprenant un matériau métallique et/ou plastique et un agent auxiliaire de compression, l'agent auxiliaire de compression contenant 25 à 60 % en poids d'un polyglycol par rapport à la quantité totale de l'agent auxiliaire de compression, et 40 à 75 % en poids d'une cire minérale par rapport à la quantité totale de l'agent auxiliaire de compression.

2. Mélange selon la revendication 1, **caractérisé en ce que** le polyglycol contient des polyéthylèneglycols.

3. Mélange selon l'une quelconque des revendications précédentes, **caractérisé en ce que** l'agent auxiliaire de compression contient des polyéthylèneglycols avec une masse molaire de 100 à 20 000 g/mol, de préférence de 100 à 7 000 g/mol.

4. Mélange selon l'une quelconque des revendications précédentes, **caractérisé en ce que** les cires minérales contiennent un ester d'acide gras en C₂₄-C₃₄.

5. Procédé de fabrication d'un mélange selon l'une quelconque des revendications 1 à 4, dans lequel
- on fait fusionner dans une première étape les polyglycols et les cires minérales contenus dans l'agent auxiliaire de compression ; et
- on ajoute dans une deuxième étape l'agent auxiliaire de compression fabriqué dans la première étape au matériau métallique et/ou plastique.

6. Procédé selon la revendication 5, **caractérisé en ce que** la masse fondue de polyglycol et de cire minérale refroidie obtenue après la première étape du procédé est broyée ou atomisée.

7. Procédé de fabrication d'un mélange selon l'une quelconque des revendications 1 à 4, dans lequel
- dans une première étape, on mélange les uns avec les autres les polyglycols et les cires minérales contenus dans l'agent auxiliaire de compression ; et
- on ajoute dans une deuxième étape l'agent auxiliaire de compression fabriqué dans la première étape au matériau métallique et/ou plastique.

8. Utilisation d'un mélange selon l'une quelconque des revendications 1 à 4 pour fabriquer des pièces moulées frittées.

9. Agent auxiliaire de compression selon l'une quelconque des revendications 1 à 4.

10. Compact vert fabriqué à partir d'un mélange selon l'une quelconque des revendications 1 à 4, **caractérisé en ce qu'**il présente une résistance à vert selon la norme ISO 3995-1985 à température ambiante de l'outil de compression et une pression de 600 MPa supérieure à 7,55 N/mm².

11. Compact vert selon la revendication 9, **caractérisé en ce qu'**il présente une masse volumique après compression selon la norme ISO 3927-1985 à 800 MPa et à température ambiante de l'outil de compression d'au moins 7,14 g/cm³.
